# KADOR & PARTNER

KADOR & PARTNER · CORNELIUSSTRASSE 15 · 8000 MÜNCHEN 5

**To the**
**European Patent Office**

**Erhardtstr. 27**

**8000 München 2**

DR. UTZ KADOR, DIPL.-CHEM.
EUROPEAN PATENT ATTORNEY
TILMAR KONLE, DIPL.-ING.
EUROPEAN PATENT ATTORNEY
JENNIFER CLAYTON
ATTORNEY AT LAW

D-8000 MÜNCHEN 5
CORNELIUSSTR. 15
TELEPHONE: (089) 2 01 52 52
TELECOPIER: (089) 2 01 44 54
TELEX: 5 25 517 kkpat
CABLE: helpat

PATENTE · MARKEN · DESIGNS · LIZENZEN

IHR ZEICHEN/YOUR REF:　　　　　　　／　　UNSER ZEICHEN/OUR REF: K 24 218/1dg　　TAG/DATE 06.06.1988

BETR./RE:

European Patent Application
No. 88 107 966.9
CHEN HSIEN HWANG and HSIEN DE WAN

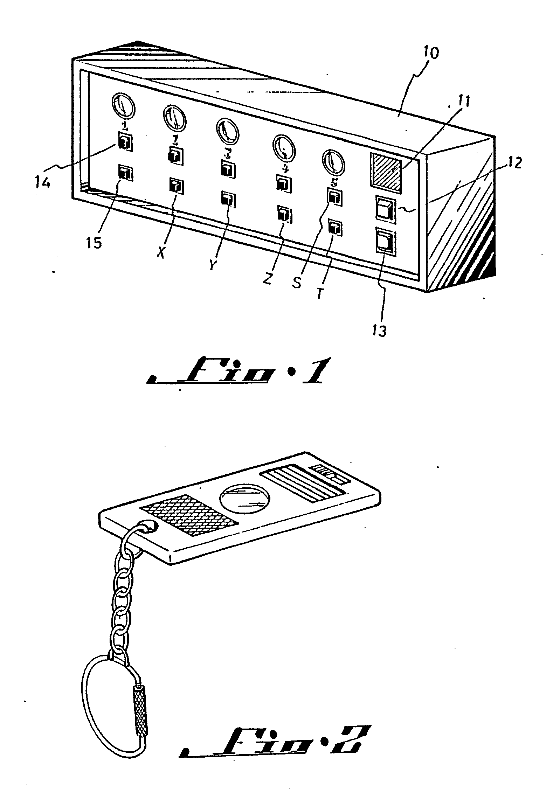

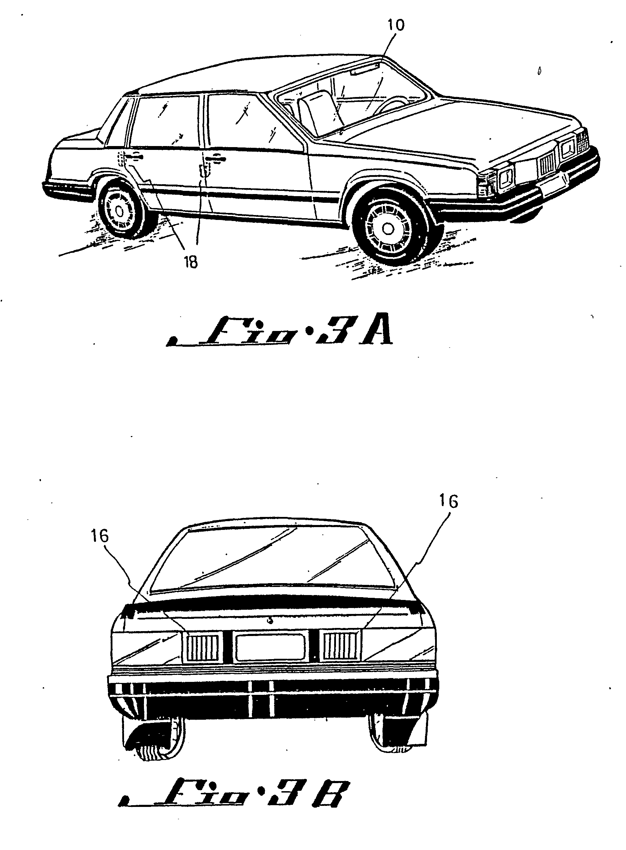

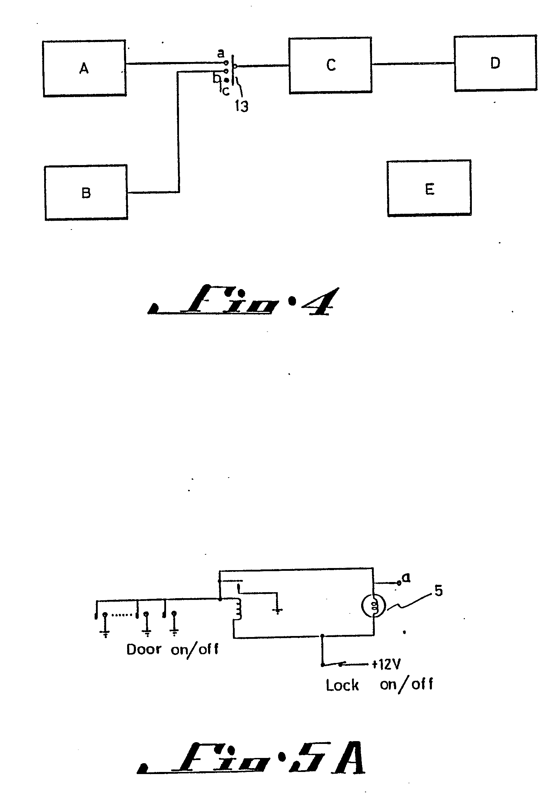

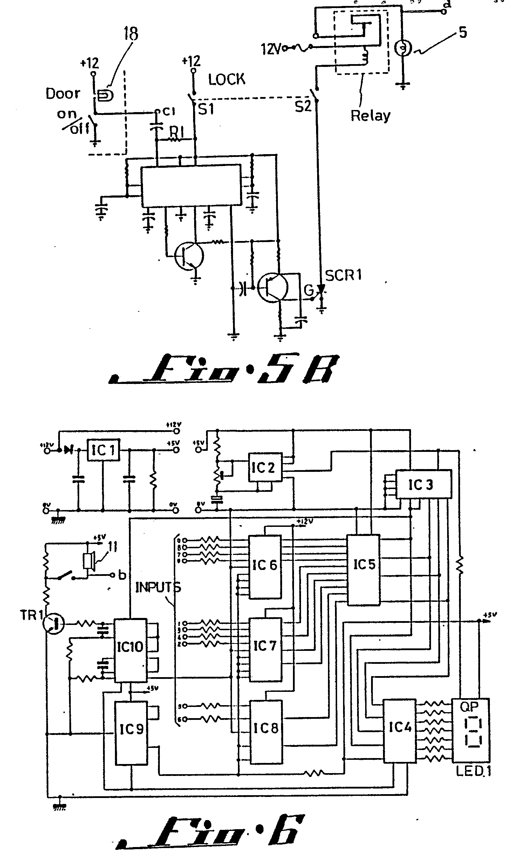

Enclosed are submitted new pages with drawings (Fig. 1 to 9) in triplicate as well as a new and slightly amended page 12 of the description.

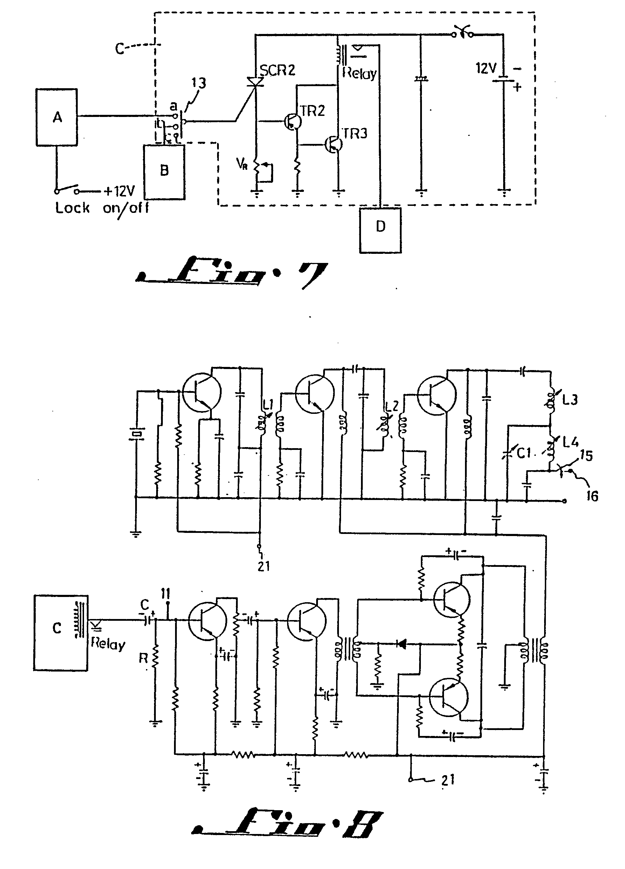

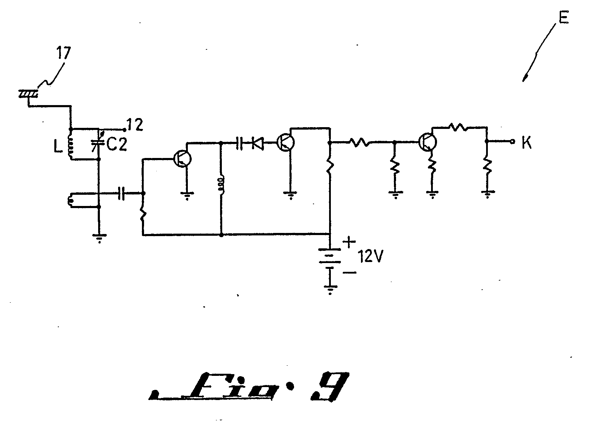

This new pages shall replace the corresponding originally filed pages. On page 12, lines 9 and 16 figures 17 and 16 are converted to "k". The new drawings are mainly the same as originally filed, i.e. Fig. 1 to 4 are the same as originally filed Fig. 1 to 4, new Fig. 5A and 5B correspond to original Fig. 5 and 6, new Fig. 6 corresponds to original Fig. 7, new Fig. 7 corresponds to originally filed Fig. 9, Fig. 8 is the same as originally filed Fig. 8 and new Fig. 9 which was omitted corresponds to the description of drawing (Fig 9) on page 12 of the description.

It is obvious that the amendements carried out are only concerned with errors of transcription and it is therefore requested to replace the corresponding originally filed pages by the pages submitted herewith.

Furthermore we submit the power of attorney.

Respectfully submitted,

Dr. U. Kador

Enclosures

New Fig. 1 to 9 (3)

New page 12 of description (3)

Power of attorney

_Fig·1_

_Fig·2_

_Fig·3A_

_Fig·3B_

Fig. 4

Door on/off

+12V

Lock on/off

Fig. 5A

Fig. 5B

Fig. 6

*Fig. 7*

*Fig. 8*

_Fig. 9_

with the adjusting buttons X, Y, Z, S, T of the alarm device 1 for adjustment control. Upon pressing on the manual transmitting button 14, the preferred frequency will then be transmitted through the output terminal 16 which is arranged at the rear part of the car. Furthermore, a terminal from the capacitor C at the input terminal of the transmitter is connected to the buzzer 11 for concomitant output of audio alarm.

As shown in FIG. 9, the input terminal k of the receiver E is arranged at the front part of the car, which comprises a sensor L and a variable capacitor C2, said capacitor C2 is connected to the distance selector switch 12 for distance selection (500M or 100M), and said sensor L is to receive signal within a preferred range of frequency. The signal thus received is sent through the output terminal k to the buzzer 11 and the indicating lamp 1 or 2 or 3 or 4 or 5 according to the frequency received so as to provide an alarm signal showing car failure, road obstruction, aboutface of the car, traffic accident, or burglarious entry.

The card type receiver or the key-chain receiver

12

Europäisches Patentamt

European Patent Office

Office européen des brevets

(19)

(11) Publication number: **0 342 255**
**A1**

# (12) EUROPEAN PATENT APPLICATION

(21) Application number: 88107966.9

(51) Int. Cl.⁴: **B60R 25/10**

(22) Date of filing: 18.05.88

A request for correction has been filed pursuant to Rule 88 EPC. A decision on the request will be taken during the proceedings before the Examining Division (Guidelines for Examination in the EPO, A-V, 2.2).

(43) Date of publication of application:
**23.11.89 Bulletin 89/47**

(84) Designated Contracting States:
**AT BE CH DE ES FR GB GR IT LI LU NL SE**

(71) Applicant: **Chen, Hsien Hwang**
**No. 3-2, Alley 8, Lane 47 San Fu St. San Fu Li Shu Lin Town(TW)**

Applicant: **Hsien, De Wan**
**No. 44, Alley 32, Lane 31 Shwang Ho St. Taipei(TW)**

(72) Inventor: **Chen, Hsien Hwang**
**No. 3-2, Alley 8, Lane 47 San Fu St. San Fu Li Shu Lin Town(TW)**
Inventor: **Hsien, De Wan**
**No. 44, Alley 32, Lane 31 Shwang Ho St. Taipei(TW)**

(74) Representative: **Kador & Partner**
**Corneliusstrasse 15**
**D-8000 München 5(DE)**

(54) **A car device for traffic condition alarm, collision preventive alarm and burglar alarm.**

(57) A car device for traffic condition alarm, collision preventive alarm and burglar alarm purposes wherein the internal circuit comprising a burglar alarm A, a car fail detector B, an emission sensur C, a transmitter(D), and a receiver 20 the front panel comprising a plurality of indicating lamps 65 for indication of different items in different frequency, a buzzer 11 and a plurality of switches (14, 15, X Y Z ST) said alarm system being arranged to install inside the car with the terminal of the transmitter (D) mounted on the rear part of the car for a practical range within 180° from the right back diresction of the car and with the terminal of the receiver 20 arranged at the front part of the car for a practical range within 180 from the right front direction of the car to prevent from receiving the output signal from the transmitter D of the car and other extraneous signals; at the time of right signal being detected, the burglar alarm detector that being arranged at each door of the car and the car fail detector (B) being energized to drive the transmitter D through the emission sensor to provide signals of traffic condition alarm, burglar alarm, and collision preventive alarm.

_Fig. 1_

# A CAR DEVICE FOR TRAFFIC CONDITION ALARM, COLLISION PREVENTIVE ALARM AND BURGLAR ALARM

## SUMMARY OF THE INVENTION

The present invention relates to an alarm system for traffic condition alarm, collision preventive alarm as well as for burglar alarm, and more particularly an alarm system to combine a transmitter and receiver into one consolidated unit to provide signals respectively for burglar alarm, traffic condition alarm and collision preventive alarm.

## BACKGROUND OF THE INVENTION

Currently, only a few traffic vehicles are equipped with car fail alarm device, thereby collision may happen to cause catastrophe at time of car fail on the road without alarm notice to the vehicles coming behind. Therefore, the arrangement of car fail alarm is very important to provide traffic security. Meanwhile, the happening of traffic accident may cause blockade of the road. Because the cars coming behind couldn't know the traffic condition ahead in advance, the drivers may keep driving ahead to the spot of accident, thereby traffic is paralyzed. If there is an alarm system to provide alarm signal of poor traffic condition to the cars coming behind, the traffic condition may probably improved.

Furthermore, regular cars may be equipped with burglar alarm device. However, such regular alarm device may be too sensitive and is easy to be energized to provide false alarm signal at time someone or some animals closely passing thereby. The false alarm may cause some troubles, more particularly during midnight, the nuisance of audio alarm may disturb other people who live and sleep therearound. Therefore, a burglar alarm device that can provide high accuracy and security will be very appreciated.

In view of the above mentioned problems, the present invention is created by the present inventor to provide the following features:

1. The provision of car fail detection with emission of alarm signal to give notice to the cars coming behind.

2. The provision of alarm signal at time of happening of traffic accident to give notice to the cars coming behind so as to prevent the cars behind from chain collision and prohibit the happening of traffic blockade.

3. The provision of an accurate burglar alarm system which provides no false action.

4. The practical range of distance of the sensor is adjustable in accordance wiht weather change, and speed change so as to porvide maximum security.

5. The provision of alternative switch for either car fail alarm or burglar alarm to reduce the cost.

6. Burglar alarm receiver can be made in card type or incorporated with a key-chain for convenience of carriage with the user.

7. The spot point of man working or closed road or bridge may be equipped with a transmitter to provide alarm signal in pre-determined frequency to the cars coming behind that equipped with the present invention.

8. The provision of burglar alarm signal to police cars or regular cars that equipped with the present invention at time of burglarious entry so as to call for help and to give a deterrent effect.

## BRIEF DESCRIPTION OF THE DRAWINGS

FIG. 1 shows an outer appearance of an alarm system embodying the present invention.

FIG. 2 shows the outer appearance of a portable type of burglar alarm receiver for the preferred embodiment according to the present invention.

FIG. 3 shows installation drawings of the allocation of the preferred embodiment according to the present invention.

FIG. 4 is an internal circuit block diagram of the preferred embodiment according to the present invention.

FIG. 5 is a circuit diagram for the burglar alarm device of the preferred embodiment according to the present invention.

FIG. 6 is a circuit diagram for the car fail detector of the preferred embodiment according to the present invention.

FIG. 7 is a circuit diagram for the emission sensor of the preferred embodiment according to the present invention.

FIG. 8 is a circuit diagram for the transmitter of the preferred embodiment according to the present invention.

FIG. 9 is a circuit diagram for the receiver of the preferred embodiment according to the present invention.

DETAILED DESCRIPTION OF THE PREFERRED

## EMBODIMENT

As shown in FIG. 3 the elongate alarm device 10 of the present invention illustrated in FIG. 1, is to be mounted at the top inside a car. The front panel of the elongate alarm device 10 comprises five indicating lamps 1, 2, 3, 4, 5 for respective designation of car failure, obstruction of road, aboutface of car, traffic accident, and burglar alarm, a buzzer 11 to be energized to act upon transmitting or receiving of a signal, a distance selector switch 12 for selection of practical distance of 500M or 100M to fit weather change or speed change (the buzzer will stop buzzing when out of the practical range), a three-steps switch 13 for control selection of ON/OFF of the present device or for the function of burglar alarm (during runnign of the car, the switch is shifted to ON position, while parking, it is shifted to burglar alarm position), a manual transmitting button 14 for use by the driver to transmit alarm signal by manual operation at time car fail detector fails to detect or whenever specific purpose is to be achieved, and a stop button 15 to interrupt the emission of alarm signal. In the present preferred embodiment, the terminal of the transmitter 16 is arranged at the rear part of the car as shown in FIG. 3B such that the practical range of the transmitter is to be restrained withing an angle of 180° from the right back direction of the car; the terminal of the receiver 17 is arranged at the front part of the car as shown in FIG. 3A such that the practical range of the receiver is to be restrained within an angle of 180 from the right front direction of the car to prevent from receiving the output signal of the transmitter that equipped with the car; a burglar alarm detector 18 is attached to each door of the car for accurate detection of burglarious entry.

As shown in FIG. 2, the burglar alarm receiver 20 of the present preferred embodiment is incorporated with a key-chain (which can either be incorporated into a card plate) for easy carriage with the user, which comprises a buzzer 21, an alarm lamp 22 and a control switch 23. The receiving frequency applied to the receiver 20 is equal to the frequency transmitted from the transmitter of the alarm device 10 (the internal circuit is same as the receiver). When burglarious entry is happened, in addition to the burglar alarm provided by the alarm device 10 that installed inside the car, the portable burglar alarm receiver 20 will simultaneously be energized to give alarm signal to the owner of the car and also to the cars or police cars therearound that equipped with the present invention.

The internal circuit of the present invention comprises: burglar alarm A, car fail detector B, emission sensor C, transmitter D, and receiver E, wherein burglar alarm A and car fail detector B are connected with emission sensor C by means of a three steps switch 13 to let the emission sensor C drive the transmitter D to provide alarm signal. Said three steps switch 13 is for functional selection of car fail alarm, burglar alarm or switching of selection. Said receiver E is to independently receive outer signal, the signal thus received is to be passed to the buzzer 11 and the indicating lamps 1-5 for the provision of respective alarm. Said buzzer 11 will transiently provide an audio signal to give notice of completion of transmition upon transmition of output from said transmitter D.

Please refer to the circuit diagram for the burglar alarm device of the present invention as shown in FIG. 5A and FIG. 5B wherein the detector 18 is arranged at the door of the car and the circuit is on if Lock ON/OFF is switched on. If to open the door of the car by violence while the circuit is on, the relay starts to work and, the indicating lamp 5 is energized to illuminate, and the transmitter D is driven to provide output signal. By means of the above arrangement, the action of the alarm is accurately performed, and the false positive alarm that resulted from the opening of the door of the car by the driver while circuit is o can then be omitted.

In the car fail detection circuit as shown in FIG. 6, it comprises 10 input terminals (Input 0-9) for respective connection with battery indicating lamp, engine oil indicating lamp, headlight indicating lamp, stop light indicating lamp ... etc. for detection on respective item. Among the input terminals, one is connected to a manual transmitting button 14 for manual operation of signal transmitting while other conditions of car failure are not detectable. The output signal is transmitted through a receiving indicating lamp 1 (which is a 7 steps LED display) and the buzzer 11 by means of the output terminal b to drive emission sensor.

As shown in FIG. 7, the emission sensor C is to make use of a silicon control rectifier (SCR2) to detect the signal from car fail detector B or burglar alarm device A and to drive the transmitter D to provide alarm signal by means of a relay.

In the transmitter D as shown in FIG. 8, the sensor L1, L2, L3 and the capacitor C1 can be modulated for frequency change, and they are respectively connected with the adjusting buttons X, Y, Z, S, T of the alarm device 1 for adjustment control. Upon pressing on the manual transmitting button 14, the preferred frequency will then be transmitted through the output terminal 16 which is arranged at the rear part of the car. Furthermore, a terminal from the capacitor C at the input terminal of the transmitter is connected to the buzzer 11 for concomitant output of audio alarm.

As shown in FIG. 9 the input terminal 17 of the receiver E is arranged at the front part of the car, which comprises a sensor L and a variable capacitor C2, said capacitor C2 is connected to the distance selector switch 12 for distance selection (500M or 100M), and said sensor L is to receive signal within a preferred range of frequency. The signal thus received is sent through the output terminal 16 to the buzzer 11 and the indicating lamp 1 or 2 or 3 or 4 or 5 according to the frequency received so as to provide an alarm signal showing car failure, road obstruction, aboutface of the car, traffic accident, or burglarious entry.

The card type receiver or the key-chain receiver as shown in the embodiment of FIG. 2, can be fixedly arranged at single frequency for a simple operation.

The man working spot, the closed road or the closed bridge can also be equipped with the transmitter before described to provide alarm signal according to a specific frequency so as to advise the cars that coming ahead to take necessary step.

The alarm system for traffic condition alarm, collision preventive alarm and burglar alarm substantially as hereinbefore described with reference to the embodiment shown in the accompanying drawings has been proved practicable to perform all the functions described.

## Claims

1. A car device for traffic condition alarm, collision preventive alarm and burglar alarm in an elongate outer shape wherein the front panel comprising:
a buzzer,
a plurality of indicating lamps for differential indication of different items from output in different frequency and respectively connected with the output terminals of a transmitter or a receiver of the internal circuit the present elongate device,
a distance selector switch,
a three steps switch,
a manual transmitting button,
a stop button, and
a plurality of adjusting buttons for respective adjustment of output frequency from the internal circuit, above said elements being respectively connected with the internal circuit of the present elongate device; the internal circuit comprising:
a burglar alarm,
a car fail detector,
an emission sensor,
a transmitter, and
a receiver; characterized in that
said burglar alarm and car fail detector being connected with said emission sensor by means of the three steps switch for alternative selection of switching ON, switching OFF or burglar alarm such that the output from burglar alarm or car fail detector energizes the transmitter through the emission sensor to provide alarm signal in predetermined frequency to other receivers; the output terminal of the transmitter being arranged at the rear part of the car and the receiving terminal of the receiver being arranged at the front part of the car respectively for a practical range of transmitting or receiving within an angle of 180° ; the detector of the burglar alarm being arranged at each door of the car for accurate performance.

2. A car device for traffic condition alarm, collision preventive alarm and burglar alarm as claimed in Claim 1 wherein burglar alarm receiver is exclusively arranged in a portable card of key-chain for easy carriage with the user, which comprising an alarm lamp, a buzzer, a control switch for ON/OFF selection of the receiver, and an internal circuit, said internal circuit being a duplicate of the receiver of the device installed inside the car so as to accurately receive the alarm signal from the transmitter.

3. A car device for traffic condition alarm, collision preventive alarm and burglar alarm as claimed in Claim 1 wherein the input terminal of the transmitter is connected with the buzzer by means of a conducting wire so as to provide a signal showing the emission of an output from the transmitter.

4. A car device for traffic condition alarm, collision preventive alarm and burglar alarm as claimed in Claim 1 wherein the manual transmitting button is connected to one of the input terminals of the car fail detector for manual operation to provide an alarm signal whenever required.

5. A car device for traffic condition alarm, collision preventive alarm and burglar alarm as claimed in Claim 1 wherein the stop button is arranged is connected with the output terminal of the transmitter for manual operation to interrupt transmission of alarm signal whenever required.

6. A car device for traffic condition alarm, collision preventive alarm and burglar alarm as claimed in Claim 1 wherein the distance selector switch is connected to one terminal of a variable capacitor at the input terminal of the receiver for the distance selection of signal receiving.

7. A car device for traffic condition alarm, collision preventive alarm and burglar alarm as claimed in Claim 1 wherein the output terminals of the receiver are respectively connected to the buzzer and to the various indicating lamps for differential indication of different alarm at different frequency.

*Fig·1*

*Fig·2*

*Fig·3A*

*Fig·3B*

_Fig. 4_

Door on/off

+12V

Lock on/off

_Fig. 5_

**Fig.6**

**Fig.7**

Fig. 8

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 218 763 (KELLEY) * Abstract; column 6, lines 17-28 * | 1 | B 60 R 25/10 |
| A | | 2,3,5 | |
| Y | US-A-4 030 088 (McCULLOUGH) * Abstract * | 1 | |
| A | | 6,7 | |
| A | GB-A-2 094 045 (EXXON RESEARCH & ENGINEERING CO.) * Abstract; figure * | 1 | |
| A | EP-A-0 011 444 (LLYOD) * Abstract; figures 1,2 * | 1,7 | |
| A | FR-A-2 535 491 (THOMSON-BRANDT) * Page 2, lines 1-22; figure 1 * | 1 | |
| A | DE-A-2 840 136 (BOGUCKI) * Page 5, lines 13-21; page 6, lines 1-20 * | 1,6,7 | |
| A | US-A-4 188 614 (HABIB) * Figure 3 * | 1-5 | TECHNICAL FIELDS SEARCHED (Int. Cl.4) B 60 R G 07 C B 60 Q |

The present search report has been drawn up for all claims

| Place of search | Date of completion of the search | Examiner |
|---|---|---|
| THE HAGUE | 18-01-1989 | ONILLON C.G.A. |

EPO FORM 1503 03.82 (P0401)